(19)

Europäisches
Patentamt
European
Patent Office
Office européen
des brevets

(11) **EP 2 020 781 A1**

(12) **EUROPEAN PATENT APPLICATION**

(43) Date of publication:
**04.02.2009 Bulletin 2009/06**

(51) Int Cl.:
***H04L 12/56*** (2006.01)

(21) Application number: **07015025.5**

(22) Date of filing: **31.07.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicant: **Nokia Siemens Networks Oy
02610 Espoo (FI)**

(72) Inventor: **Pereira, Goncalo
Amadora (PT)**

(74) Representative: **Bruglachner, Thomas E.
Nokia Siemens Networks GmbH & Co. KG
Patentabteilung
Postfach 80 17 60
81617 München (DE)**

(54) **Method and device for processing an MPLS network by a policy decision function and communication system comprising such device**

(57)      A method and a device are provided for processing an MPLS network by a policy decision function, said method comprising the steps of (i) service information is provided to and/or requested by the policy decision function; and (ii) said service information provided is utilized for administrating connection details.

# FIG 2

— MPLS Tunnel
LER    Label Edge Router
LSR    Label Switch Router
SW     Switch

**Description**

The invention relates to a method and to a device for processing an MPLS network by a policy decision function and to a communication system comprising such a device.

In computer networking and telecommunications, MultiProtocol Label Switching (MPLS) (see, e.g., [1]) is a data-carrying mechanism which emulates some properties of a circuit-switched network over a packet-switched network.

MPLS operates at an OSI Model layer that is generally considered to lie between traditional definitions of Layer 2 (data link layer) and Layer 3 (network layer), and thus is often referred to as a "Layer 2.5" protocol. It was designed to provide a unified data-carrying service for both circuit-based clients and packet-switching clients which provide a datagram service model. It can be used to carry many different kinds of traffic, including IP packets, as well as native ATM, SONET, and Ethernet frames.

Admission control (see [2]) is known as a network Quality of Service (QoS) procedure. Admission control determines how bandwidth and latency are allocated to streams with various requirements. Admission control schemes therefore need to be implemented between network edges and core to control the traffic entering the network.

An application that wishes to use the network to transport traffic with QoS must first request a connection, which involves informing the network about the characteristics of the traffic and the QoS required by the application. This information is stored in a traffic contract. The network judges whether it has enough resources available to accept the connection, and then either accepts or rejects the connection request. This concept is also referred to as Admission Control.

Admission control is useful in situations where a certain number of connections (e.g., phone conversations) may all share a link, while an even greater number of connections causes significant degradation in all connections to the point of making them all useless such as in a congestive collapse.

An admission control system used for allowing new flows like voice and/or video multimedia services in a telecommunications network is in particular useful for enforcing security restrictions, business policies or quality of service.

The problem to be solved is provide means for efficiently handling an MPLS network.

This problem is solved according to the features of the independent claims. Further embodiments result from the depending claims.

In order to overcome this problem, a method for processing an MPLS network by a policy decision function is provided, said method comprising the steps:

- Service information is provided to and/or requested by the policy decision function;

- Said service information provided is utilized for an administrating connection detail.

Hence, based on such service information the MPLS network can be processed, in particular controlled, amended, set up, maintained or the like. In particular connection relevant parameters or details can be processed, utilized and/or administered accordingly.

Said policy decision function comprises an admission control functionality that can hence be applied to MPLS networks.

Preferably, an admission control system acts upon the underlying transport network to do a proper configuration thereby ensuring that a service is granted or denied.

This is in particular useful in the surroundings of MPLS, because of its significant traffic engineering capabilities, which may be used to provide different levels of quality of service and resiliency for, e.g., multimedia services.

This approach suggests a set of operations that are to be implemented in a policy decision function (PDF), hence enabling a policy oriented management of such an MPLS network, which can either be an access network or a core network.

The approach presented herewith comprises several aspects. One is an admission control that can be enforced in real time throughout the MPLS network. Another aspect is related to an analysis of the MPLS network that can be performed prior to the actual admission control function running.

In addition or as an alternative and in particular if some analysis step has been conducted before, based on various network node (also referred to "node" or "network element") properties, link capacities and traffic matrixes planning of the MPLS network in advance according to different routing criteria could be provided.

In an embodiment, the service information provided to and/or requested by the policy decision function comprises or relates to at least one of the following:

- Quality of Service;
- Network performance;
- Security;
- Business rules.

Thus, all information collected by or conveyed to the policy decision function can be utilized for at least one administrating connection detail of the MPLS network.

In another embodiment, the administrating connection detail comprises at least one of the following:

- Creation, changing or deleting label switched paths within the MPLS network;
- Online and/or offline analysis of the MPLS network;
- Controlling the MPLS network;
- Traffic engineering of the MPLS network.

In a further embodiment, the service information is provided to and/or requested by the policy decision function utilizing at least one of the following means:

- Offline analysis of the MPLS network;
- Operation and maintenance messages.

In particular, Operation and Maintenance (OAM) messages of the MPLS protocol can be utilized by the policy decision function to obtain service information.

In a next embodiment, a common policy service (COPS) is used for a policy based communication between the policy decision function and at least one network element of the MPLS network.

It is also an embodiment that MPLS OAM messages are used to obtain conditions and/or information relating to the MPLS network.

Pursuant to another embodiment, the method as described herein is used to build a simplified representation of the MPLS network.

As per embodiment, a representation of the MPLS network is obtained by a spanning tree protocol.

Such loop-free representation of a network may be obtained by applying a spanning tree protocol (STP), see, e.g. [3]. Based on such representation (or model) of an underlying real network, admission control as well as other control functions can be applied by the policy decision function.

According to an embodiment, the representation of the MPLS network is simplified by combining two links in case a preceding link provides sufficient resources, in particular bandwidth, for both such links.

This is in particular useful if a representation of an MPLS network for a policy decision function is a loop-free graph that can be administered accordingly.

According to another embodiment, the processing of the MPLS network is provided online and/or offline.

In yet another embodiment, the MPLS network comprises or is part of an access network or of a core network.

The problem stated above is also solved by a device for processing an MPLS network comprising a processor unit that is arranged and/or equipped such that the method as described herein is executable on said processor unit.

Pursuant to yet an embodiment, said device is a communication device, in particular a network element comprising a policy decision function.

Further, the problem is solved by a communication system comprising the device as described herein.

Embodiments of the invention are shown and illustrated in the following figures:

Fig.1 shows an example of a network scenario comprising an MPLS network in the access as well as in the core;

Fig.2 shows an equivalent internal representation of the exemplary scenario according to Fig.1 as built by the policy decision function;

Fig.3 shows a flow chart comprising steps of a method for processing an MPLS network by a policy decision function.

It is to be noted that MPLS network herein refers to a network comprising an MPLS functionality or an MPLS network/functionality that is part of a network.

The policy decision function (PDF) proposed foresees the admission control function for offline processing of network topologies and policies, for building internal network capacity models as well as for real-time handling of admission control requests.

As a complement to the offline analysis, MPLS operation and maintenance (OAM) features (in particular OAM messages) can be used to monitor actual conditions of a service information to be provided. Alternatively or in addition, possible network paths could be checked in order to avoid excessive load situations.

COPS (common policy service) protocol can be used for communication between a policy decision point (PDP) and network elements or nodes of the MPLS network, e.g., label edge routers (LERs), that act as policy enforcement points (PEPs).

The policy decision point (PDP) may store templates of policies which, as the result of the admission control decision, can be applied to a policy enforcement point as a traffic classifier (for policing, marking and shaping purposes).

The policy decision point (PDP) can be (made) aware of topology changes within the MPLS network and hence could use explicit route creation to propose alternative routes.

As an example, the following policies can be utilized and may be applied to at least one label edge router (LER) within an MPLS network:

a. Traffic flows are mapped to label switched paths (LSPs) via pseudo wires (PWs). A setting of such policies involves setting up classifiers at the ingress label edge routers (LERs) of the label switched paths (LSP) to evaluate which packets get to be admitted and how such packets shall be processed.

b. The classifiers in the policy decision function shall specify forward equivalence classes (FECs), which are associated with label switched paths (LSPs) and as such define which packets shall be sent over the label switched path.
The forward equivalence class (FEC) can be mapped to specific classes or criteria that will be defined according to characteristics like application, source and destination address or like a DiffServ coding point (DSCP).

c. The label switched paths (LSPs) can be monitored after creation, QoS values can be obtained (measured) and/or requested and thus such valued can be compared with values defined when the request for the service was passed to the policy decision function (PDF) from an application server.

d. The set of admission control security policies can be utilized for restricting the access to a label switched path (LSP), based on a user's authorization to originate traffic over a given label switched path (LSP). This approach allows to support the virtual private network (VPN) concept.

e. Creation and/or deletion of a label switched path (LSP) can be handled.
The policy decision function may trigger a creation of a label switched path (LSP) based on several criteria or based on requests from the application server. Moreover, the policy decision function may react on a particular failure notification from a link or node within the network.

f. Data flows established are preferably specified by the following parameters:

- source IP address,
- destination IP address,
- source port,
- destination port and
- protocol.

Several advantages arise when an MPLS network is processed and/or controlled by a policy decision function.
Without such approach, creation/deletion of a label switched path may be driven by the network topology itself. This bears a significant disadvantage regarding traffic engineering. However, the approach suggested herein allows such creation/deletion of a label switched path based on a significant amount of service information made available to or requested by the policy decision function. Such service information comprises in particular terms regarding quality of service (QoS), network performance, security or business rules.
Networks comprising an approach that is based on differential services (DiffServ) do not only require having a mechanism performing admission control, but also need some way to interact with the MPLS control plane. The approach presented herewith enables an optimization of dynamic label switched path admission criteria (for example, via pseudo wire) thereby simplifying an integration of service level agreements with specific actions at the MPLS level.

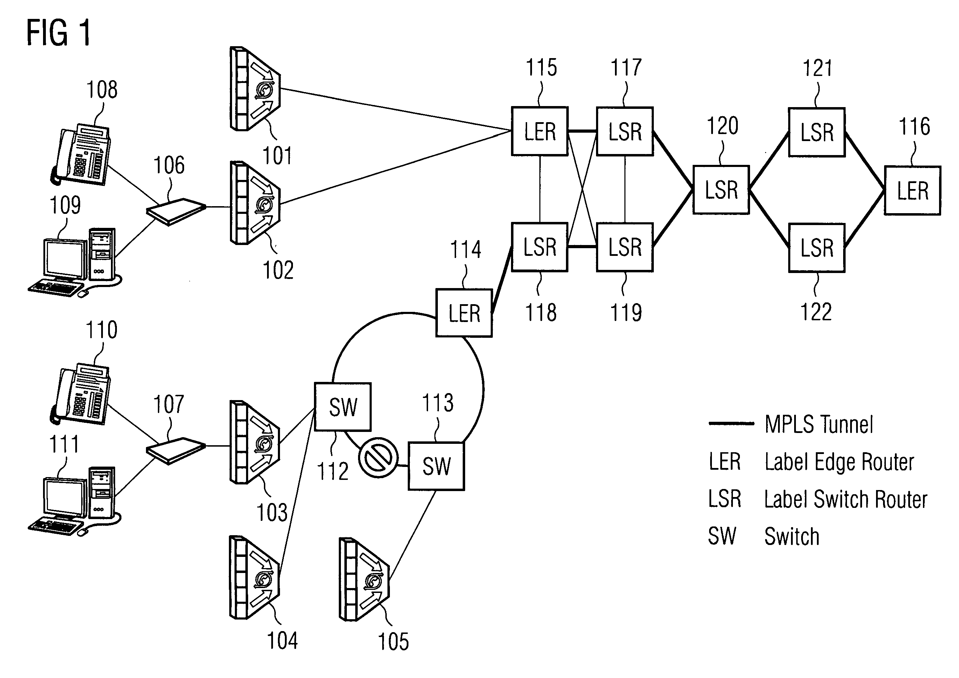

Fig.1 shows an example of a network scenario comprising an MPLS network (also referred to as MPLS tunnel) in the access as well as in the core.
In order to improve legibility, hereinafter the following abbreviations are used:

LSR     Label Switch Router
LER     Label Edge Router
SW      Switch
DSLAM   Digital Subscriber Line Access Multiplexer
CPE     Customer Premises Equipment

A LER 116 is connected to a LSR 121 and to a LSR 122, both are further connected to a LSR 120. The LSR 120 is connected to a LSR 117 and to a LSR 119, wherein the LSR 117 is further connected to a LER 115 and the LSR 119 is further connected to a LSR 118, which is also connected to a LER 114. The connections described so far comprise MPLS tunnels as indicated in Fig.1.
LER 115 is further connected to LSR 118 and to LSR 119. LSR 117 is further connected to LSR 119 and to LSR 118.
LER 115 is also connected to a DSLAM 101 and to a DSLAM 102, which is further connected to a CPE 106. CPE 106 is connected to a telephone 108 and to a personal computer 109.
LER 114 is part of a protected ring network further comprising network elements SW 112 and SW 113. In order to avoid loops within the ring network, the link between SW 112 and SW 113 is blocked.
SW 112 is further connected to a DSLAM 103 and to a DSLAM 104, SW 113 is further connected to a DSLAM 105.
DLSAM 103 is connected to a CPE 107, which is further connected to a telephone 110 and to a personal computer 111.

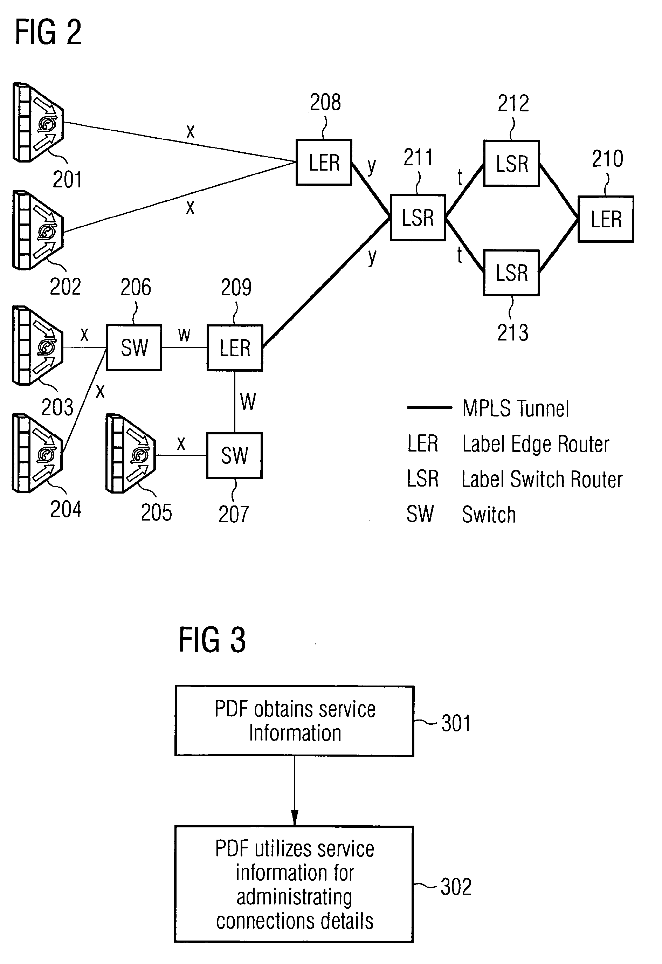

Fig.2 shows an equivalent internal representation of the exemplary scenario according to Fig.1 as built by the policy decision function.
The network elements LER 116, LSR 121, LSR 122 and LSR 120 are mapped accordingly to network elements LER 210, LSR 212, LSR 213 and LSR 211.
The network elements LER 115, LSR 117, LER 114, LSR 118 and LSR 119 are mapped to network elements LER 208 and LER 209.
SW 112 corresponds to a SW 206 and SW 113 corresponds to a switch 207.
DSLAMs 101 to 105 correspond to DSLAMs 201 to 205, wherein DSLAMs 201 and 202 are connected to LER 208, DSLAMs 203 and 205 are connected to SW 206 and DSLAM 205 is connected to SW 207.
Network components 208 to 213 are connected by MPLS tunnels.
This representation includes the object dependencies and singles out which objects limit the maximum data rate that can be admitted in the network and which must be subject to bandwidth management for the policy decision function.
The representation according to Fig.2 can be constructed and/or obtained by offline processing means, and then be loaded into a module responsible for performing the actual admission control, which optionally may have to cope with ongoing real-time traffic.

In Fig.2, resources between network elements are indicated. Such resources may preferably be bandwidth or capacity (to be) available or required.

Between LSR 212 and LSR 211 a capacity t is depicted. Such capacity t is also shown between LSR 213 and LSR 211. Between LSR 211 and LER 208 as well as between LSR 211 and LER 209 each link shows a capacity y. Between LER 208 and each connected DSLAM 201, 202 a capacity x is depicted. Between LER 209 and SW 206 and between LER 209 and SW 207 a capacity w is indicated. Each of the links between DSLAM 203 and SW 206, DSLAM 204 and SW 206 and DSLAM 205 and SW 207 shows a capacity x.

For the link capacities t, y, w and x depicted the following relationship applies:

$$x < w < y < t$$

For administrative purposes, the policy decision function may process the MPLS network pursuant to the following rules:

a. If $2^*x < y$ then DSLAMs 201, 202 to LER 208 can be aggregated to one link only;

b. If $2^*x < w$ then DSLAMs 203, 204 to SW 206 can be aggregated to one link only;

c. If $2^*x < w$ and $2^*w < y$ then the combination of DSLAMs 203, 204, 205, SWs 206, 207 to LER 209 can be aggregated to one link only.

d. If a. to c. apply and $2^*y < t$ then all links on the left hand side of LSR 211 can be collapsed to one link only.

**Fig.3** shows a flow chart comprising steps of a method for processing an MPLS network by a policy decision function (PDF).

In a step 301 the policy decision function (PDF) obtains service information relating to the MPLS network. This can be achieved by the policy decision function (PDF) actively requesting such service information or by providing the PDF with service information. Service information may in particular relate to quality of service, network performance, security and/or business rules.

Based on the service information obtained, the policy decision function (PDF) administrates connection details in a step 302. Administration of connection details may comprise creating/deleting of label switched paths within the MPLS network, offline analysis of the MPLS network, controlling of the MPLS network or traffic engineering of the MPLS network.

The steps may in particular be performed during runtime of the MPLS network or offline. Also, combinations thereof may apply, i.e. a portion of the administration of connection details can be conducted during runtime, whereas another portion, e.g. analysis and traffic engineering, may be processed or evaluated offline.

The approach presented allows the policy decision function (PDF) to obtain and to visualize a representation of an MPLS network that can be utilized for, e.g., traffic engineering purposes considering constraints throughout the network that would otherwise scarcely be apparent.

**References:**

[1] Wikipedia:

http://en.wikipedia.org/wiki/Multiprotocol_Label_Swit ching

[2] Wikipedia:

http://en.wikipedia.org/wiki/Admission_control

[3] Wikipedia:

http://en.wikipedia.org/wiki/Spanning_tree_protocol

**Claims**

1. A method for processing an MPLS network by a policy decision function comprising the following steps:

- Service information is provided to and/or requested by the policy decision function;
- Said service information provided is utilized for an administrating connection detail.

2. The method according to claim 1, wherein service information provided to and/or requested by the policy decision function comprises or relates at least one of the following:

- Quality of Service;
- Network performance;
- Security;
- Business rules.

3. The method according to any of the preceding claims, wherein the administrating connection detail comprises at least one of the following:

- Creation, changing or deleting label switched paths within the MPLS network;

- Online and/or offline analysis of the MPLS network;
- Controlling the MPLS network;
- Traffic engineering of the MPLS network.

**4.** The method according to any of the preceding claims, wherein service information is provided to and/or requested by the policy decision function utilizing at least one of the following means:

- Offline analysis of the MPLS network;
- Operation and maintenance messages.

**5.** The method according to any of the preceding claims, wherein a common policy service (COPS) is used for a policy based communication between the policy decision function and at least one network element of the MPLS network.

**6.** The method according to any of the preceding claims, wherein MPLS OAM messages are used to obtain conditions and/or information relating to the MPLS network.

**7.** The method according to any of the preceding claims, wherein said method is used to build an simplified representation of the MPLS network.

**8.** The method according to any of the preceding claims, wherein a representation of the MPLS network is obtained by a spanning tree protocol.

**9.** The method according to claim 8, wherein the representation of the MPLS network is simplified by combining two links in case a preceding link provides sufficient resources, in particular bandwidth, for both such links.

**10.** The method according to any of the preceding claims, wherein the processing of the MPLS network is provided online and/or offline.

**11.** The method according to any of the preceding claims, wherein the MPLS network comprises or is part of an access network or of a core network.

**12.** A device for processing an MPLS network comprising a processor unit that is arranged such that the method according of any of the preceding claims is executable on said processor unit.

**13.** The device according to claim 12, wherein said device is a communication device, in particular a network element comprising a policy decision function.

**14.** Communication system comprising the device according to any of claims 12 or 13.

# FIG 1

MPLS Tunnel

LER    Label Edge Router
LSR    Label Switch Router
SW     Switch

EP 2 020 781 A1

# FIG 2

208

201

202

x

x

LER ⟩ 208

y

211
LSR

y

212
LSR

t

210
LER

t

213
LSR

206     209

203

204     205     207

SW     w     LER

x

x

W

SW

x

—— MPLS Tunnel
LER    Label Edge Router
LSR    Label Switch Router
SW     Switch

# FIG 3

PDF obtains service
Information — 301

PDF utilizes service
information for
administrating
connections details — 302

## EUROPEAN SEARCH REPORT

European Patent Office

Application Number

EP 07 01 5025

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 082 102 B1 (WRIGHT STEVEN A [US]) 25 July 2006 (2006-07-25) * abstract * * column 1, line 14 - line 35 * * column 1, line 38 - line 46 * * column 2, line 12 - column 4, line 16 * * column 4, line 39 - column 6, line 6 * * column 8, line 18 - line 48 * * column 10, line 24 - line 54 * * column 12, line 25 - column 14, line 32 * * column 18, line 6 - line 27 * * column 18, line 55 - column 19, line 19 * * claims 1,9,11,17,18 * * figures 1-4,6-11 * | 1-14 | INV. H04L12/56 |
| X | US 6 341 127 B1 (KATSUBE YASUHIRO [JP] ET AL) 22 January 2002 (2002-01-22) * abstract * * column 1, line 8 - line 11 * * column 2, line 24 - line 32 * * column 2, line 34 - column 5, line 39 * * column 7, line 44 - column 8, line 14 * * column 9, line 6 - column 10, line 41 * * claims 1,4,8,11,14,16,19,23,24,27,28 * * figure 2 * | 1-14 | TECHNICAL FIELDS SEARCHED (IPC) H04L |

The present search report has been drawn up for all claims

| Place of search | Date of completion of the search | Examiner |
|---|---|---|
| Munich | 14 November 2007 | Schrembs, Gerd |

**ANNEX TO THE EUROPEAN SEARCH REPORT
ON EUROPEAN PATENT APPLICATION NO.**                    EP 07 01 5025

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2007

| Patent document cited in search report | | Publication date | Patent family member(s) | Publication date |
|---|---|---|---|---|
| US 7082102 | B1 | 25-07-2006 | NONE | |
| US 6341127 | B1 | 22-01-2002 | NONE | |

EPO FORM P0459

For more details about this annex : see Official Journal of the European Patent Office, No. 12/82